# EUROPEAN PATENT APPLICATION

(11) **EP 3 110 140 A1**
(43) Date of publication of application: **28.12.2016**
(21) Application number: 14883248.8
(22) Date of filing: 20.08.2014
(51) Int. Cl.: H04N 7/15, G06F 3/042

(54) **VIDEO CONFERENCE-BASED ELECTRONIC WHITEBOARD INTERACTION METHOD AND TERMINAL**

(30) Priority: 21.02.2014 CN 201410060614
(71) Applicant: ZTE Corporation, Shenzhen, Guangdong 518057 (CN)
(72) Inventor: LU, Zhengyu, Shenzhen Guangdong 518057 (CN); SHI, Rong, Shenzhen Guangdong 518057 (CN)
(74) Representative: Novagraaf Technologies
(86) International application number: PCT/CN2014/084843
(87) International publication number: WO 2015/123977

(57) **Abstract**

Provided are an interaction method based on an electronic whiteboard of a video-conference, and a terminal. The method includes that: a built-in Multi Control Unit (MCU) terminal enables an electronic whiteboard function, and allocates an operable whiteboard space for each participating terminal according to the number of participating terminals; the built-in MCU terminal acquires whiteboard data of each participating terminal, determines a display coordinate of the whiteboard data sent by each participating terminal according to the operable whiteboard space allocated for each participating terminal, integrates all the acquired whiteboard data, and sends the integrated whiteboard data and the display coordinates to each participating terminal; and each participating terminal calculates data output positions according to the all determined display coordinates, and displays the received integrated whiteboard data at the calculated positions. By virtue of the technical solutions of the present disclosure, each conference terminal can in real time input a text in an electronic whiteboard area which is authorized for the conference terminal and share content of the text to other participating terminals.

## Description

### Technical Field

The present disclosure relates to the field of computers, and in particular to an interaction method based on an electronic whiteboard of a video-conference, and a terminal.

### Background

In a related art, communication of a conference terminal mainly includes video communication and audio communication. However, along with development of a communication technology, requirements of people on video conference communication are not limited to videos and audios, and text-information-based interaction and communication also becomes more and more important.

A text-information-based communication solution for a conventional video conference is mainly implemented in a manner that a certain terminal sends a caption or a short message, and other terminals receive and display the caption or the short message. Such a text-information-based communication manner is not able to implement real-time interaction, and this is because other terminals is not able to send any caption after any one terminal sends a caption and the other terminals are able to reacquire rights for sending a caption merely after the current caption is sent.

After a built-in whiteboard function is released, text interaction and communication may be implemented on a point-to-point conference, but a function of enabling multiple participating terminals to send captions at the same time or selectively enabling two participating terminals to send captions on a multipoint conference is not able to be realized is not able to be realized.

### Summary

For the problem of incapability of enabling multiple participating terminals to send captions at the same time or selectively enabling two participating terminals to send captions in the related art, the present disclosure discloses an interaction method based on an electronic whiteboard of a video-conference, and a terminal.

According an embodiment of the present disclosure, an interaction method based on an electronic whiteboard of a video-conference is provided, including: enabling, by a built-in Multi Control Unit (MCU) terminal, an electronic whiteboard function, and allocating an operable whiteboard space for each participating terminal according to the number of participating terminals; acquiring, by the built-in MCU terminal, whiteboard data of each participating terminal, determining a display coordinate of the whiteboard data sent by each participating terminal according to the operable whiteboard space allocated for each participating terminal, integrating all acquired whiteboard data, and sending the integrated whiteboard data and all determined display coordinates to each participating terminal; and respectively calculating, by each participating terminal, data output positions according to the all determined display coordinates, and displaying the received integrated whiteboard data at the calculated positions.

In an example embodiment, enabling, by the built-in MCU terminal, the electronic whiteboard function includes: when determining that each participating terminals supports the electronic whiteboard function during establishing a call of a video conference, enabling, by the built-in MCU terminal, the electronic whiteboard function after the video conference is established.

In an example embodiment, after allocating the operable whiteboard space for each participating terminal according to the number of the participating terminals, further including: setting, by each participating terminal, a video acquisition format of whiteboard peripheral equipment according to the number of operable areas.

In an example embodiment, acquiring, by the built-in MCU terminal, the whiteboard data of each participating terminal includes: respectively acquiring, by each participating terminal, the whiteboard data on the whiteboard peripheral equipment according to the video acquisition format, and sending the whiteboard data to the built-in MCU terminal; and acquiring, by the built-in MCU terminal, the whiteboard data of each participating terminal.

In an example embodiment, when the built-in MCU terminal sends the integrated whiteboard data to a certain participating terminal, merely integrated whiteboard data of other participating terminals except the certain participating terminal is sent.

According to an embodiment of the present disclosure, a built-in Multi Control Unit (MCU) terminal is provided, including: an enabling and allocation component, configured to enable an electronic whiteboard function, and allocate an operable whiteboard space for each participating terminal according to the number of participating terminals; an integration and sending component, configured to acquire whiteboard data of each participating terminal, determine a display coordinate of the whiteboard data sent by each participating terminal according to the operable whiteboard space allocated for each participating terminal, integrate all acquired whiteboard data, and send the integrated whiteboard data and all determined display coordinates to each participating terminal; and a calculation and display component, configured to calculate data output positions according to the all determined display coordinates, and display the received integrated whiteboard data at the calculated positions.

In an example embodiment, the enabling and allocation component is configured to: when determining that each participating terminals supports the electronic whiteboard function during establishing a call of a video conference, enable the electronic whiteboard function after the video conference is established.

In an example embodiment, the device further including: a video acquisition format setting component, configured to, after the enabling and allocation component allocates the operable whiteboard space for each participating terminal according to the number of the participating terminals, set a video acquisition format of whiteboard peripheral equipment according to the number of operable areas, wherein the integration and sending component is configured to: acquire the whiteboard data on the whiteboard peripheral equipment according to the video acquisition format, and acquire the whiteboard data the whiteboard data of each participating terminal.

In an example embodiment, the integration and sending component is configured to, when sending the integrated whiteboard data to a certain participating terminal, merely send the integrated whiteboard data of other participating terminals except the certain participating terminal.

According to another embodiment of the present disclosure, a video conference terminal is provided, including: an acquisition component, configured to acquire whiteboard data on whiteboard peripheral equipment and send the acquired whiteboard data to a built-in Multi Control Unit (MCU) terminal; and a display component, configured to receive, integrated whiteboard data and a display coordinate corresponding to whiteboard data of each participating terminal, send by the built-in MCU terminal, calculate data output positions according to the all determined display coordinates and display the received integrated whiteboard data at the calculated positions.

The present disclosure has beneficial effects as follows:
by virtue of the technical solutions of the embodiment of the present disclosure, multiparty text-information-based interaction and communication among conference terminals is implemented through the built-in whiteboard function of the conference terminals after the video conference terminal with the built-in MCU establishes a multiparty conference, so that the problem of incapability of enabling multiple participating terminals to send captions at the same time or selectively enabling two participating terminals to send captions in the related art is solved, and each conference terminal can in real time input a text in an electronic whiteboard area which is authorized for the conference terminal and share content of the text to other participating terminals.

The above description is only the summary of the technical solutions of the present disclosure, the technical means of the present disclosure may be implemented to be understood more clearly according to contents of the specification, and moreover, in order to make the abovementioned and other purposes, characteristics and advantages of the present disclosure more obvious and easier to understand, specific implementation modes of the present disclosure are specially described below.

### Brief Description of the Drawings

By reading detailed descriptions about the following preferred implementation modes, those skilled in the art get clearer about various other advantages and benefits. The drawings are only adopted to show purposes of the preferred implementation modes and not considered as limits to the present disclosure. Moreover, in all of the drawings, the same reference symbols are adopted to represent the same parts. In the drawings:
Fig. 1 is a flowchart of an interaction method based on an electronic whiteboard of a video-conference according to an embodiment of the present disclosure;
Fig. 2 is a diagram of realization of a built-in whiteboard function according to an embodiment of the present disclosure;
Fig. 3 is a diagram of a principle for an interaction method based on an electronic whiteboard of a video-conference according to an embodiment of the present disclosure;
Fig. 4 is a flowchart of capability negotiation of a built-in whiteboard interaction function according to an embodiment of the present disclosure;
Fig. 5 is a flowchart of interaction about built-in whiteboard resource allocation according to an embodiment of the present disclosure;
Fig. 6 is a diagram of a corresponding relationship between an operable area and a data acquisition format according to an embodiment of the present disclosure;
Fig. 7 is a flowchart of data acquisition processing according to an embodiment of the present disclosure;
Fig. 8 is a flowchart of data synthesis processing according to an embodiment of the present disclosure;
Fig. 9 is a flowchart of data output processing according to an embodiment of the present disclosure;
Fig. 10 is a structure diagram of a built-in MCU terminal according to an embodiment of the present disclosure; and
Fig. 11 is a structure diagram of a video conference terminal according to an embodiment of the present disclosure.

### Detailed Description of the Embodiments

Exemplary embodiments of the present disclosure will be described below with reference to the drawings in more detail. Although the exemplary embodiments of the present disclosure are displayed in the drawings, it should be understood that the present disclosure may be implemented in various forms without limitations of the embodiments elaborated herein. Instead, these embodiments are provided to make the present disclosure understood more thoroughly and completely show the scope of the present disclosure to those skilled in the art.

In order to solve the problem of incapability of enabling multiple participating terminals to send captions at the same time or selectively enabling two participating terminals to send captions in the related art, the present disclosure provides an interaction method based on an electronic whiteboard of a video-conference and a terminal. The present disclosure will be further described below with reference to the drawings and embodiments in detail. It should be understood that the specific embodiments described here are merely adopted to explain the present disclosure and not intended limit the present disclosure.

### Method embodiment

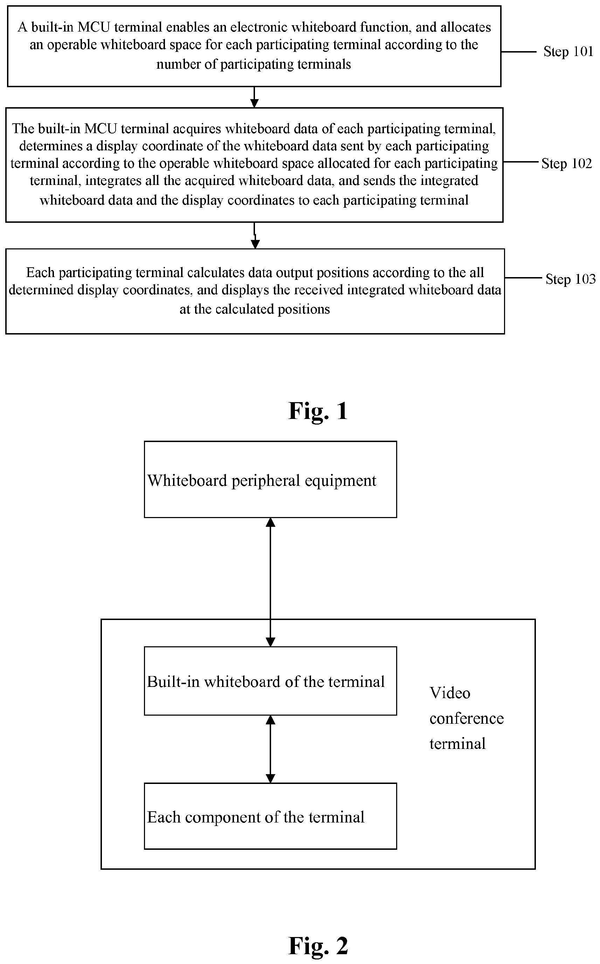

According to the embodiment of the present disclosure, an interaction method based on an electronic whiteboard of a video-conference is provided, Fig. 1 is a flowchart of an interaction method based on an electronic whiteboard of a video-conference according to an embodiment of the present disclosure, and as shown in Fig. 1, the interaction method based on the electronic whiteboard of the video-conference according to the embodiment of the present disclosure includes the following processing.

Step 101: a built-in MCU terminal enables an electronic whiteboard function, and allocates an operable whiteboard space for each participating terminal according to the number of participating terminals. For example, when the whole electronic whiteboard space of all terminals is 1 and there are 4 participating terminals at present, an electronic whiteboard space available for each terminal is 1/4.

In Step 101, the operation that the built-in MCU terminal enables the electronic whiteboard function may includes that: when determining that each participating terminals supports the electronic whiteboard function during establishing a call of a video conference, the built-in MCU terminal enables the electronic whiteboard function after the video conference is established.

After the operable whiteboard space is allocated for each participating terminal according to the number of the participating terminals, each participating terminal may set a video acquisition format of whiteboard peripheral equipment according to the number of operable areas.

Step 102: the built-in MCU terminal acquires whiteboard data of each participating terminal, determines a display coordinate of the whiteboard data sent by each participating terminal according to the operable whiteboard space allocated for each participating terminal, integrates all the acquired whiteboard data, and sends the integrated whiteboard data and the display coordinates to each participating terminal, wherein the data sent to ordinary terminals is required to be coded, and the data sent to the built-in MCU terminal is not required to be coded.

In step 102, the operation that the built-in MCU terminal acquires the whiteboard data of each participating terminal may includes that: each participating terminal respectively acquires the whiteboard data on the whiteboard peripheral equipment according to the video acquisition format, and sends the whiteboard data to the built-in MCU terminal; and the built-in MCU terminal acquires the whiteboard data of each participating terminal.

It is important to note that when the built-in MCU terminal sends the integrated whiteboard data to a certain participating terminal, merely integrated whiteboard data of other participating terminals except the certain participating terminal is sent.

Step 103: each participating terminal calculates data output positions according to the all determined display coordinates, and displays the received integrated whiteboard data at the calculated positions.

The technical solution of the embodiment of the present disclosure will be described below in detail.

The embodiment of the present disclosure relates to a method for implementing multiparty text-information-based interaction and communication among participating terminals through a built-in whiteboard function of a video conference terminal with a built-in MCU after the terminal establishes a multiparty conference, and realization of the built-in whiteboard function of the embodiment of the present disclosure is shown in Fig. 2.

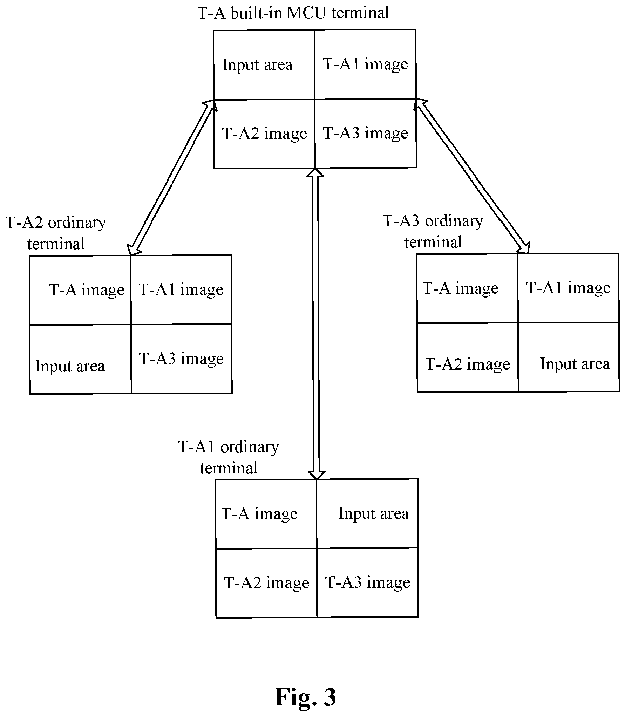

Fig. 3 is a diagram of a principle for an interaction method based on an electronic whiteboard of a video-conference according to an embodiment of the present disclosure. As shown in Fig. 3, when the built-in MCU terminal calls all ordinary terminals to participate in the conference, the built-in MCU terminal allocates a text input area for a built-in electronic whiteboard of each participating terminal (when the whole electronic whiteboard space of each terminal is 1 and there are 4 participating terminals at present, an electronic whiteboard space available for each terminal is 1/4, and Fig. 3 shows input areas of each ordinary terminal and the built-in MCU terminal on electronic whiteboard equipment after the built-in MCU terminal calls multiple points to participate in the conference), each ordinary terminal may input a text in the areas after allocation, the input text is acquired, coded and sent to the built-in MCU terminal through components in the terminals, and the built-in MCU terminal synthesizes the whiteboard data sent by the ordinary terminals and locally acquired whiteboard data, and sends the synthesized data to all the participating terminals (the data sent to the ordinary terminals is required to be coded and the data sent to the built-in MCU terminal is not required to be coded), thereby implementing real-time interaction and communication among the participating terminals through the text.

In an example embodiment, the technical method adopted by the embodiment of the present disclosure includes the following steps.

First, a protocol interaction step: the protocol interaction step includes two sub-steps, i.e. a capability interaction step for whether the built-in electronic whiteboard function is supported or not and a resource interaction step for operable electronic whiteboard spaces of the terminals.
1: the capability interaction step: when the built-in MCU terminal calls the ordinary terminals or the ordinary terminals call the built-in MCU terminal, the built-in MCU terminal and the ordinary terminals add private fields (i.e. fields of built-in electronic whiteboard supporting capabilities) in a capability set to indicate that the terminal currently supports the built-in whiteboard function. During intercommunication between the built-in MCU terminal and an ordinary terminal, when any party does not support the function, the built-in whiteboard interaction functions of both parties in the conference is not able to be enabled.
2: the resource interaction step: after the built-in whiteboard interaction function is enabled, the built-in MCU terminal allocates an operable whiteboard space for each terminal according to the number of the participating terminals, and simultaneously sends the operable space to the other ordinary participating terminals through a negotiated field (a size and a position of the operable whiteboard space correspond to some flag bits respectively in the negotiated field).

Second, a data processing step: the step includes three sub-steps, i.e. a data acquisition step, a data synthesis step and a data output step.
1: the data acquisition step: the data acquisition step mainly performs data acquisition on input operation of the built-in whiteboards.
2: the data synthesis step: the data synthesis step mainly performs data superposition on received whiteboard data of the ordinary terminals and the whiteboard data input by the built-in MCU terminal after the built-in MCU terminal receives the whiteboard data from the ordinary terminals, namely merging the whiteboard data of the ordinary terminals and the whiteboard data input by the built-in MCU terminal.
3: the data output step: the data output step mainly performs output position calculation according to the sizes of the operable spaces and locked spaces obtained by resource interaction, and then outputs the data to calculated positions.

The technical solution of the embodiment of the present disclosure will be described below with examples with reference to the drawings.

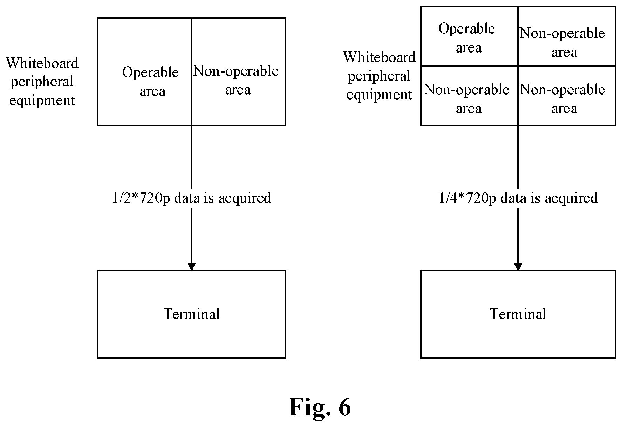

Descriptions will be made below with the condition that the built-in MCU terminal calls three ordinary terminals to participate in a conference as an example.
Step 1: when calling the ordinary terminals to participate in the conference, the built-in MCU terminal judges whether each opposite terminal supports a built-in whiteboard interaction function or not from signaling interaction between both terminals (built-in whiteboard interaction represents that the terminals is able to input a text on electronic whiteboard equipment at the same time and display the text on the electronic whiteboard equipment at the same time), enables the function when both terminals support the built-in whiteboard interaction function, and does not enable the built-in whiteboard interaction function when any party does not support the function.

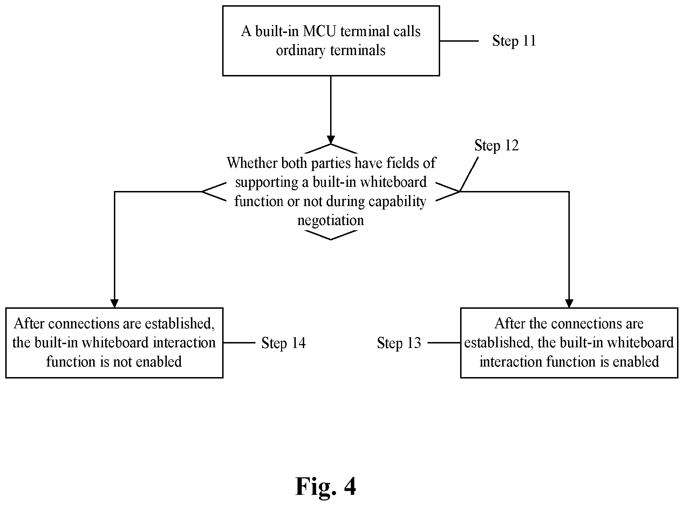

   Fig. 4 is a flowchart of capability negotiation of a built-in whiteboard interaction function according to an embodiment of the present disclosure, and as shown in Fig. 4, the flow may include the following processing:
   Step 11: the built-in MCU terminal calls the ordinary terminals to participate in the conference;
   Step 12: the built-in MCU terminal judges whether both parties have fields indicating support of the built-in whiteboard function or not during capability negotiation with the ordinary terminals, Step 13 is executed when a judgment result is that both parties have fields indicating support of the built-in whiteboard function, otherwise Step 14 is executed;
   Step 13: after connections are established, the built-in whiteboard function is enabled; and
   Step 14: after the connections are established, the built-in whiteboard function is not enabled.
Step 2: after a built-in whiteboard interaction flow is ended, the built-in MCU terminal allocates areas of operable spaces for the ordinary participating terminals, and sends content in the areas to the ordinary participating terminals, and the ordinary terminal enables the operable input area in the built-in electronic whiteboard function and lock the non-operable area after receiving the operable areas allocated by the built-in MCU terminal.

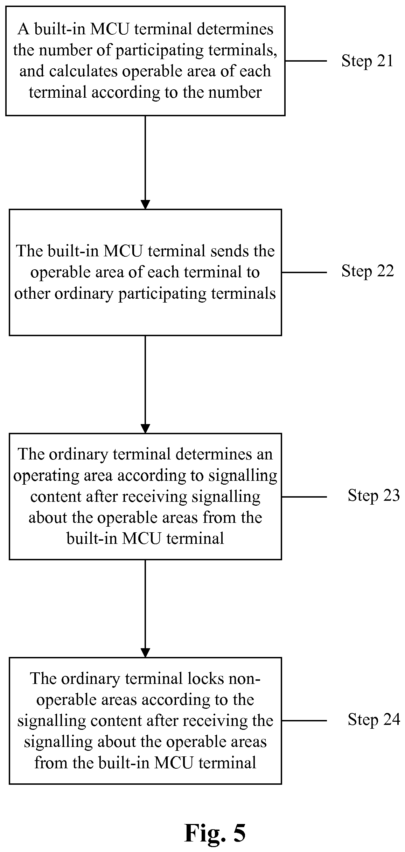

   Fig. 5 is a flowchart of interaction about built-in whiteboard resource allocation according to an embodiment of the present disclosure, and as shown in Fig. 5, the flow specifically includes the following processing:
   Step 21: the built-in MCU terminal determines the number of the participating terminals, and calculates an operable space for each terminal according to the number;
   Step 22: the built-in MCU terminal sends the operable areas of all terminals to other ordinary participating terminals;
   Step 23: the ordinary terminal determines an operating area according to signalling content after receiving signalling about the operable area from the built-in MCU terminal; and
   Step 24: the ordinary terminal locks the non-operable areas according to the signalling content after receiving the signalling about the operable areas from the built-in MCU terminal.
Step 3: after the resource interaction flow is ended, the terminal sets a video data acquisition format according to the operable areas. Since the number of the participating terminals determines the operable area of the built-in whiteboard and the operable area determine the format of the video output by the built-in whiteboard to the terminal, as shown in Fig. 6, when a format of the whole image output by the whiteboard peripheral equipment to the terminal is 720p, when there are two participating terminals, the operable area of each piece of whiteboard peripheral equipment is 1/2 and the format of the image output to the terminal is 1/2*720p; and when there are three participating terminals, the operable area of each piece of whiteboard peripheral equipment is 1/3 and the format of the image output to the terminal is 1/3*720p. Therefore, data acquisition component is required to set the video acquisition format according to the operable area of the participating terminal.

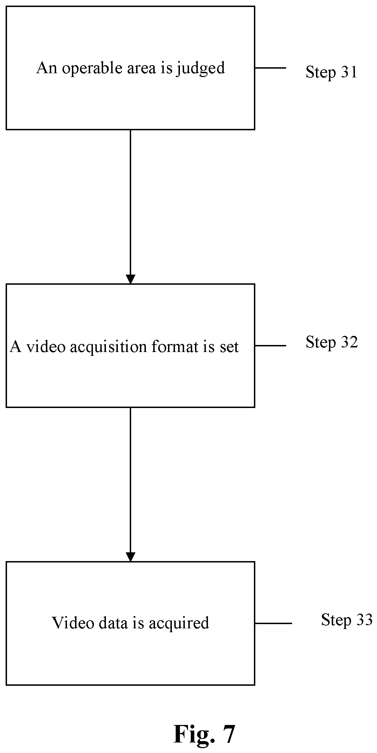

   Fig. 7 is a flowchart of data acquisition processing according to an embodiment of the present disclosure, and as shown in Fig. 7, the flow specifically includes the following processing:
   Step 31: the operable area of the terminal on the built-in whiteboard is determined;
   Step 32: the video acquisition format is set according to the operable area; and
   Step 33: video data is acquired after setting.
Step 4: after the ordinary terminal and the built-in MCU terminal input texts on the whiteboard peripheral equipment at the same time, input text content is required to be processed through a data synthesis component of the built-in MCU terminal, and in a superposition process, the data synthesis component of the built-in MCU terminal performs superposition on different content of the image sent to each terminal according to the operable space area of each terminal, and sends the superposed data to the ordinary terminals (the data is sent to each terminal through a network after being coded) and the built-in MCU terminal (the data is directly sent to a local output component without coding) after superposition.

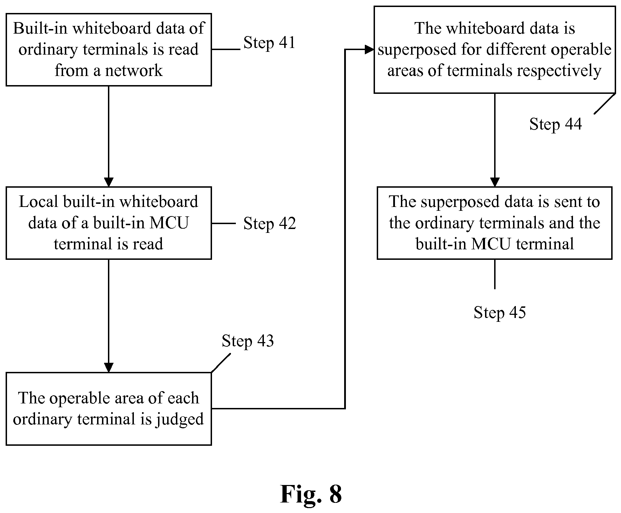

   Fig. 8 is a flowchart of data synthesis processing according to an embodiment of the present disclosure, and as shown in Fig. 8, the flow may include the following processing:
   Step 41: the built-in whiteboard data of the ordinary terminals is read from the network;
   Step 42: the local built-in whiteboard data of the built-in MCU terminal is read;
   Step 43: the operable area of each ordinary terminal is determined;
   Step 44: the whiteboard data is superposed for different operable areas of terminals respectively; and
   Step 45: the superposed data is sent to the ordinary terminals and the built-in MCU terminal.
Step 5: after the ordinary terminals receive the superposed data from the built-in MCU terminal, data output component of the terminal perform output position calculation according to the size of the operable space and locked space obtained by resource interaction, and then output the received superposed data to the calculated positions, and the output component of the built-in MCU terminal directly acquires the superposed data from the synthesis component, and outputs the data to the calculated positions.

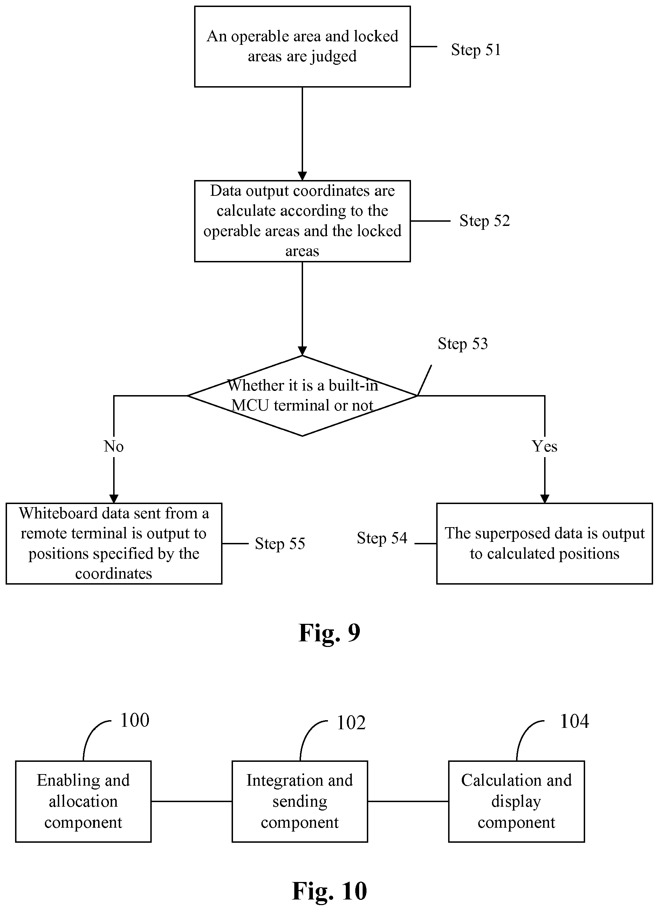

   Fig. 9 is a flowchart of data output processing according to an embodiment of the present disclosure, and as shown in Fig. 9, the flow may include the following processing:
   Step 51: the operable areas and the locked areas are determined;
   Step 52: data output coordinates are calculated according to the operable areas and the locked areas;
   Step 53: whether it is the built-in MCU terminal or not is judged, Step 54 is executed when a judgment result is that it is the built-in MCU terminal, otherwise Step 55 is executed;
   Step 54: the superposed data is output to the calculated positions; and
   Step 55: the whiteboard data sent from a remote terminal is output to positions specified by the coordinates.

Compared with the related art, the embodiment of the present disclosure implements simultaneous text-based interaction and communication among multiple terminals through built-in electronic whiteboards on a multipoint conference and better realizes a multiparty interaction function.

### Device embodiment 1

According to the embodiment of the present disclosure, a built-in MCU terminal is provided, Fig. 10 is a structure diagram of a built-in MCU terminal according to an embodiment of the present disclosure, and as shown in Fig. 10, the built-in MCU terminal according to the embodiment of the present disclosure includes: an enabling and allocation component 100, an integration and sending component 102 and a calculation and display component 104. Each component of the embodiment of the present disclosure will be described below in detail.

The enabling and allocation component 100 is configured to enable an electronic whiteboard function, and allocate an operable whiteboard space for each participating terminal according to the number of participating terminals; and
the enabling and allocation component 100 is configured to: when determining that each participating terminals supports the electronic whiteboard function during establishing a call of a video conference, enable the electronic whiteboard function after the video conference is established.

The integration and sending component 102 is configured to acquire whiteboard data of each participating terminal, determine a display coordinate of the whiteboard data sent by each participating terminal according to the operable whiteboard space allocated for each participating terminal, integrate all acquired whiteboard data, and send the integrated whiteboard data and all determined display coordinates to each participating terminal; and the integration and sending component 102 is configured to: when sending the integrated whiteboard data to a certain participating terminal, merely send the integrated whiteboard data of other participating terminals except the certain participating terminal.

The calculation and display component 104 is configured to calculate data output positions according to the all determined display coordinates, and display the received integrated whiteboard data at the calculated positions.

In an example embodiment, the built-in MCU terminal further includes:
a video acquisition format setting component, configured to, after the enabling and allocation component 100 allocates the operable whiteboard space for each participating terminal according to the number of the participating terminals, set a video acquisition format of whiteboard peripheral equipment according to the number of operable areas; and
the integration and sending component 102 is configured to: acquire the whiteboard data on the whiteboard peripheral equipment according to the video acquisition format, and acquire the whiteboard data the whiteboard data of each participating terminal.

Specific processing of the components of the embodiment of the present disclosure may be understood with reference to descriptions in the method embodiment, and will not be elaborated herein.

### Device embodiment 2

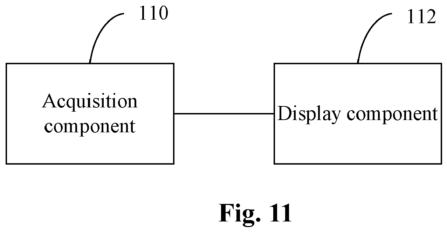

According to the embodiment of the present disclosure, a video conference terminal is provided, Fig. 11 is a structure diagram of a video conference terminal according to an embodiment of the present disclosure, and as shown in Fig. 11, the video conference terminal according to the embodiment of the present disclosure includes: an acquisition component 110 and a display component 112. Each component of the embodiment of the present disclosure will be described below in detail.

The acquisition component 110 is configured to acquire whiteboard data on whiteboard peripheral equipment and send the whiteboard data to a built-in MCU terminal; and
the display component 112 is configured to receive, integrated whiteboard data and a display coordinate corresponding to whiteboard data of each participating terminal, send by the built-in MCU terminal, calculate data output positions according to the all determined display coordinates and display the received integrated whiteboard data at the calculated positions.

Specific processing of the components of the embodiment of the present disclosure may be understood with reference to descriptions in the method embodiment, and will not be elaborated herein.

From the above, by virtue of the technical solutions of the embodiment of the present disclosure, multiparty text-information-based interaction and communication among conference terminals is implemented through the built-in whiteboard function of the conference terminals after the video conference terminal with the built-in MCU establishes a multiparty conference, so that the problem of incapability of enabling multiple participating terminals to send captions at the same time or selectively enabling two participating terminals to send captions in the related art is solved, and each conference terminal can in real time input a text in an electronic whiteboard area which is authorized for the conference terminal and share content of the text to other participating terminals.

Obviously, those skilled in the art may make various modifications and transformations on the present disclosure without departing from the spirit and scope of the present disclosure. Therefore, the present disclosure is intended to include these modifications and transformations if these modifications and transformations of the present disclosure fall within the scope of claims of the present disclosure and equivalent technologies thereof.

### Industrial Applicability

From the above, according to the abovementioned embodiments and preferred implementation modes, the problem of incapability of enabling multiple participating terminals to send captions at the same time or selectively enabling two participating terminals to send captions in the related art is solved, and each conference terminal can in real time input a text in an electronic whiteboard area which is authorized for the conference terminal and share content of the text to other participating terminals.

## Claims

1. An interaction method based on an electronic whiteboard of a video-conference, comprising:
enabling, by a built-in Multi Control Unit, MCU, terminal, an electronic whiteboard function, and allocating an operable whiteboard space for each participating terminal according to the number of participating terminals;
acquiring, by the built-in MCU terminal, whiteboard data of each participating terminal, determining a display coordinate of the whiteboard data sent by each participating terminal according to the operable whiteboard space allocated for each participating terminal, integrating all acquired whiteboard data, and sending the integrated whiteboard data and all determined display coordinates to each participating terminal; and
respectively calculating, by each participating terminal, data output positions according to the all determined display coordinates, and displaying the received integrated whiteboard data at the calculated positions.

2. The method as claimed in claim 1, wherein enabling, by the built-in MCU terminal, the electronic whiteboard function comprises:
when determining that each participating terminals supports the electronic whiteboard function during establishing a call of a video conference, enabling, by the built-in MCU terminal, the electronic whiteboard function after the video conference is established.

3. The method as claimed in claim 1, after allocating the operable whiteboard space for each participating terminal according to the number of the participating terminals, further comprising:
setting, by each participating terminal, a video acquisition format of whiteboard peripheral equipment according to the number of operable areas.

4. The method as claimed in claim 3, wherein acquiring, by the built-in MCU terminal, the whiteboard data of each participating terminal comprises:
respectively acquiring, by each participating terminal, the whiteboard data on the whiteboard peripheral equipment according to the video acquisition format, and sending the whiteboard data to the built-in MCU terminal; and
acquiring, by the built-in MCU terminal, the whiteboard data of each participating terminal.

5. The method as claimed in claim 1, wherein, when the built-in MCU terminal sends the integrated whiteboard data to a certain participating terminal, merely integrated whiteboard data of other participating terminals except the certain participating terminal is sent.

6. A built-in Multi Control Unit, MCU, terminal, comprising:
an enabling and allocation component, configured to enable an electronic whiteboard function, and allocate an operable whiteboard space for each participating terminal according to the number of participating terminals;
an integration and sending component, configured to acquire whiteboard data of each participating terminal, determine a display coordinate of the whiteboard data sent by each participating terminal according to the operable whiteboard space allocated for each participating terminal, integrate all acquired whiteboard data, and send the integrated whiteboard data and all determined display coordinates to each participating terminal; and
a calculation and display component, configured to calculate data output positions according to the all determined display coordinates, and display the received integrated whiteboard data at the calculated positions.

7. The terminal as claimed in claim 6, wherein the enabling and allocation component is configured to: when determining that each participating terminals supports the electronic whiteboard function during establishing a call of a video conference, enable the electronic whiteboard function after the video conference is established.

8. The terminal as claimed in claim 6, further comprising:
a video acquisition format setting component, configured to, after the enabling and allocation component allocates the operable whiteboard space for each participating terminal according to the number of the participating terminals, set a video acquisition format of whiteboard peripheral equipment according to the number of operable areas, wherein
the integration and sending component is configured to: acquire the whiteboard data on the whiteboard peripheral equipment according to the video acquisition format, and acquire the whiteboard data the whiteboard data of each participating terminal.

9. The terminal as claimed in claim 6, wherein the integration and sending component is configured to, when sending the integrated whiteboard data to a certain participating terminal, merely send the integrated whiteboard data of other participating terminals except the certain participating terminal.

10. A video conference terminal, comprising:
an acquisition component, configured to acquire whiteboard data on whiteboard peripheral equipment and send the acquired whiteboard data to a built-in Multi Control Unit, MCU, terminal; and
a display component, configured to receive, integrated whiteboard data and a display coordinate corresponding to whiteboard data of each participating terminal, send by the built-in MCU terminal, calculate data output positions according to the all determined display coordinates and display the received integrated whiteboard data at the calculated positions.
